# EUROPEAN PATENT APPLICATION

(11) **EP 2 515 070 A1**
(43) Date of publication of application: **24.10.2012**
(21) Application number: 12002236.3
(22) Date of filing: 28.03.2012
(51) Int. Cl.: G01B 11/03, G01B 11/25, G06T 7/00

(54) **Shape measurement device**

(30) Priority: 18.04.2011 JP 2011091736
(71) Applicant: Mitutoyo Corporation, Kawasaki Kanagawa 213-8533 (JP)
(72) Inventor: Nemoto, Kentaro, Kawasaki Kanagawa 213-8533 (JP); Yamagata, Masaoki, Kawasaki Kanagawa 213-8533 (JP)
(74) Representative: Müller-Boré & Partner Patentanwälte

(57) **Abstract**

Disclosed is a shape measurement device which scans a surface of a work by a probe in a noncontact manner and measures a surface shape of the work. The probe includes: a light irradiation unit which irradiates linear light onto the work; and an imaging unit which images reflected light of the light irradiated from the light irradiation unit, the reflected light being reflected by the work. The imaging unit includes: an imaging element which images an image of the work; an image-forming lens which forms the image of the reflected light being reflected by the work on an imaging plane of the imaging element; and a lens exchange unit which makes the image-forming lens exchangeable.

## Description

### CROSS-REFERENCE TO RELATED APPLICATIONS

This application is based upon and claims the benefit of priority from the prior Japanese Patent Application No. 2011-091736, filed on April 18, 2011, the entire contents of which are incorporated herein by reference.

### BACKGROUND OF THE INVENTION

### 1. Field of the Invention

The present invention relates to a shape measurement device.

### 2. Background Art

Heretofore, a shape measurement device has been known, which scans a surface of a work, that is referred to as an object to be measured, by a probe in a noncontact manner, and measures a shape of the surface of the work (for example, refer to Japanese Translation of PCT International Application Publication No. JP-T-2009-534969).

The probe is composed by including an imaging element such as a charge coupled device (CCD) and a complementary metal oxide semiconductor (CMOS), an image-forming lens, a line laser, and the like, and performs the measurement by using the Scheimpflug principle.

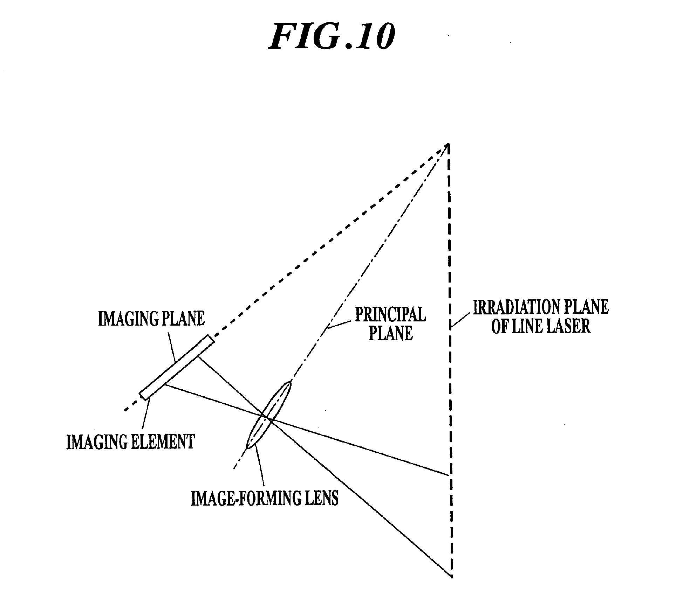

As shown in FIG. 10, the Scheimpflug principle refers to that, in the case where planes, which are obtained by individually extending an imaging plane of the imaging element, a principal plane including a principal point of the image-forming lens, and an irradiation plane of the line laser irradiated onto the work, are arranged so as to intersect one another at one point, the imaging plane of the imaging element entirely turns to a focusing state.

In the probe using the Scheimpflug principle as described above, measurement accuracy (resolving power) and a measurement range are in a tradeoff relationship. That is to say, in the case of measuring, by the imaging element, the work placed on the irradiation plane of the line laser, then an imaging range of the image-forming lens for use is decided by optical magnification thereof.

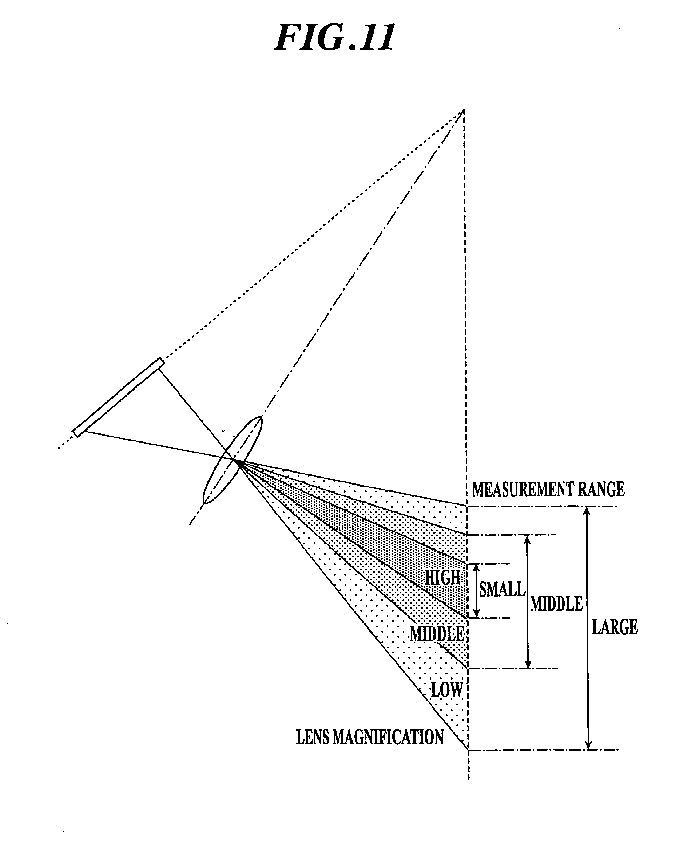

Therefore, as shown in FIG. 11, in the case of measuring a wide range, an image-forming lens of low magnification is used, and in the case of measuring a narrow range with high accuracy, an image-forming lens of high magnification is used.

Incidentally, heretofore, in the probe as described above, a configuration has been adopted, in which the line laser and the image-forming lens are fixed to the probe concerned in a manufacturing process, and cannot be replaced once being fixed. Therefore, the measurement accuracy and measurement range of the probe have been uniquely decided by optical magnification of the fixed image-forming lens and a size of the imaging element.

Therefore, in matching with a size of the work for which the measurement is desired to be performed, it has been necessary to switch a probe having an appropriate measurement range (or measurement accuracy), and it has been necessary to prepare plural types of probes different in specifications of the measurement range (measurement accuracy).

In order to prepare plural types of the probes only because desired measurement ranges (measurement accuracies) differ, enormous cost has occurred, and in addition, it has been necessary to perform an alignment operation and the like every time of exchanging the probe, resulting in an increase of installation man-hours.

### SUMMARY OF THE INVENTION

It is an object of the present invention to provide a shape measurement device including a probe capable of adjusting and changing the measurement range and the measurement accuracy.

According to an aspect of the present invention, there is provided a shape measurement device which scans a surface of a work by a probe in a noncontact manner and measures a surface shape of the work, the probe including: a light irradiation unit which irradiates linear light onto the work; and an imaging unit which images reflected light of the light irradiated from the light irradiation unit, the reflected light being reflected by the work, and the imaging unit includes:
an imaging element which images an image of the work;
an image-forming lens which forms the image of the reflected light being reflected by the work on an imaging plane of the imaging element; and
a lens exchange unit which makes the image-forming lens exchangeable.

### BRIEF DESCRIPTION OF THE DRAWINGS

The above and other objects, advantages and features of the present invention will become more fully understood from the detailed description given hereinbelow and the appended drawings and tables which are given by way of illustration only, and thus are not intended as a definition of the limits of the present invention, and wherein:
FIG. 1 is an overall configuration diagram of a shape measurement device of the present invention;
FIG. 2 is a view for explaining a configuration of an optical probe of the shape measurement device;
FIGS. 3A and 3B are views for explaining operations of the shape measurement device;
FIG. 4 is a view for explaining an imaging unit according to a first embodiment;
FIG. 5 is a view for explaining lens exchange of the first embodiment;
FIG. 6 is a view for explaining an imaging unit of a second embodiment;
FIG. 7 is a plan view of a lens exchange unit of the second embodiment;
FIG. 8 is a view for explaining an imaging unit of a third embodiment;
FIG. 9 is a plan view showing a lens exchange unit of the third embodiment;
FIG. 10 is a view for explaining the Scheimpflug principle; and
FIG. 11 is a view for explaining a relationship between measurement accuracy and a measurement range.

### PREFERRED EMBODIMENTS OF THE INVENTION

A description is made of an embodiment of the present invention with reference to the drawings. However, the scope of the invention is not limited to the illustrated example.

### [First Embodiment]

First, a description is made of a configuration.

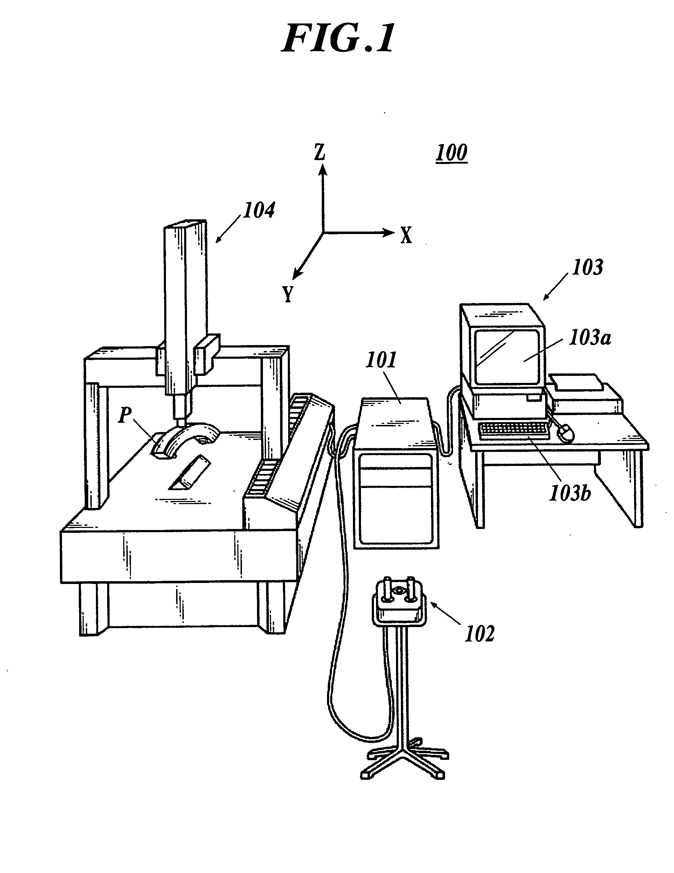

As shown in FIG. 1, a shape measurement device 100 is composed by including a control device 101; an operation unit 102; a host system 103; and a device body unit 104.

The control device 101 controls drive of the device body unit 104, and captures necessary measurement coordinate value and the like from the device body unit 104.

The operation unit 102 is used for allowing a user to manually operate the device body unit 104 through the control device 101.

The host system 103 is composed by including: a display unit 103a that displays a variety of screens; an operation unit 103b that receives an operation designation from the user; a printer unit for performing printing on a sheet; and the like.

The display unit 103a is composed, for example, of a liquid crystal display (LCD), and in accordance with an operation signal from the operation unit 103b, displays a variety of setting screens, operation statuses of respective functions, and the like on a screen. The operation unit 103b is composed, for example, of a keyboard having a variety of keys, and outputs the operation signal to the control device 101 in response to an operation by the finger and the like.

Moreover, the host system 103 includes functions to edit/execute a part program for designating a measurement procedure in the control device 101, to perform calculation for applying a geometric shape to the measurement coordinate value and the like, which are captured thereto through the control device 101, and to record/transmit the part program.

The device body unit 104 has a surface plate mounted on vibration removal board, and includes an optical probe P that drives in X-, Y- and Z-directions above the surface plate, and the like.

The optical probe P scans a surface of a work in a noncontact manner, and measures a surface shape of the work.

The optical probe P performs measurement by using the Scheimpflug principle, and an imaging plane of an imaging element 31 (to be described later) of an imaging unit 30 entirely turns to a focusing state.

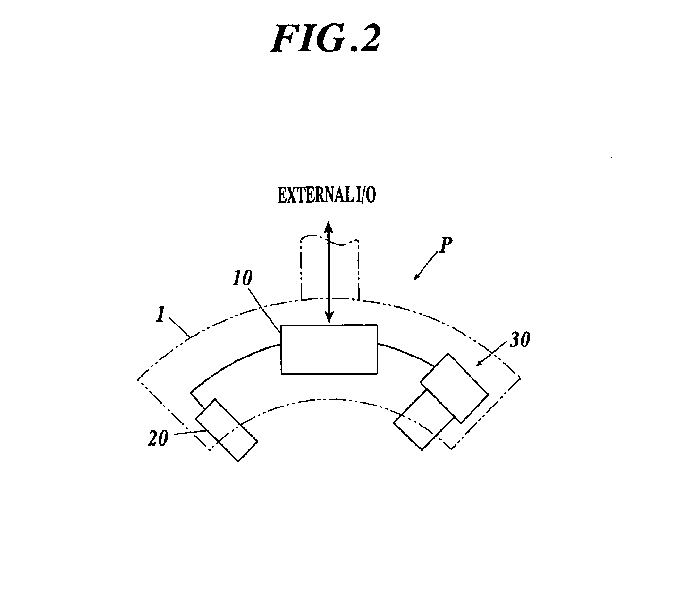

As shown in FIG. 2, the optical probe P is composed by including a control unit 10, a light irradiation unit 20, an imaging unit 30 and the like in a cabinet 1.

The control unit 10 is composed by including: a central processing unit (CPU) ; a random access memory (RAM) ; a read only memory (ROM) (all of which are not shown), and the like, and performs centralized control for the operations of light irradiation unit 20 and the imaging unit 30. For example, the control unit 10 performs control of adjusting the light amount of the irradiated light from the light irradiation unit 20, calculating the shape of the work by using an output signal from the imaging unit 30, and the like.

The light irradiation unit 20 is composed by including a light source, a collimator lens, a rod lens (all of which are not shown), and the like, and irradiates linear light onto the work.

Specifically, a laser beam with a predetermined wavelength, which is emitted from the light source, becomes a parallel beam by the collimator lens, and is converted into the linear light by the rod lens, and thereafter, is irradiated as the linear light onto the work. Note that it is also possible to use a cylindrical lens instead of the rod lens.

Then, when such a linear laser beam is irradiated from the light irradiation unit 20 onto the work, reflected light of the laser beam is deformed along an irregular shape of the surface of the work, and an outline when the work is cut along a certain cross section is lighted up.

The imaging unit 30 is arranged in a direction making a predetermined angle with respect to an irradiation direction of the light irradiated onto the work from the light irradiation unit 20, and receives, from the predetermined angle, the light reflected along the shape of such a work surface.

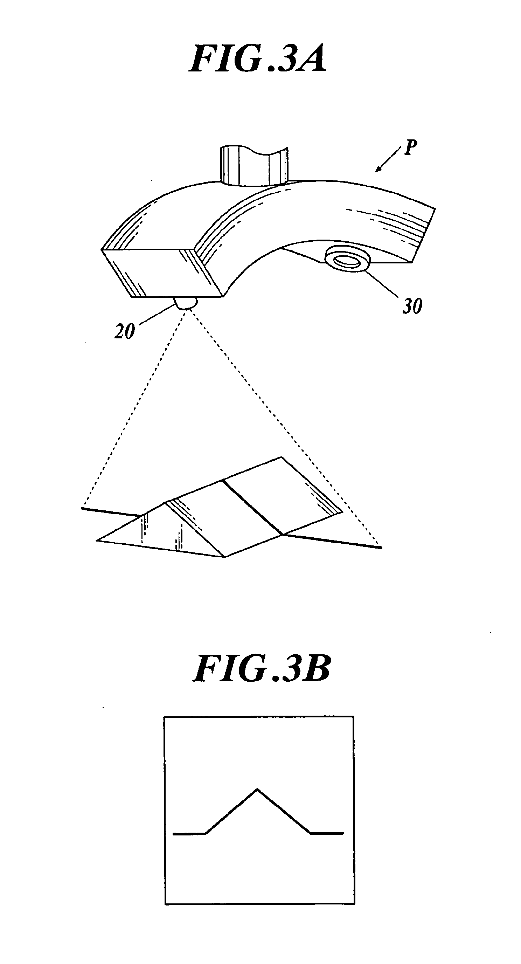

As shown in FIG. 3A, the imaging unit 30 images the work at a predetermined angle, and accordingly, as shown in FIG. 3B, an image of the reflected light of the laser beam, which goes along the surface shape of the work, is imaged.

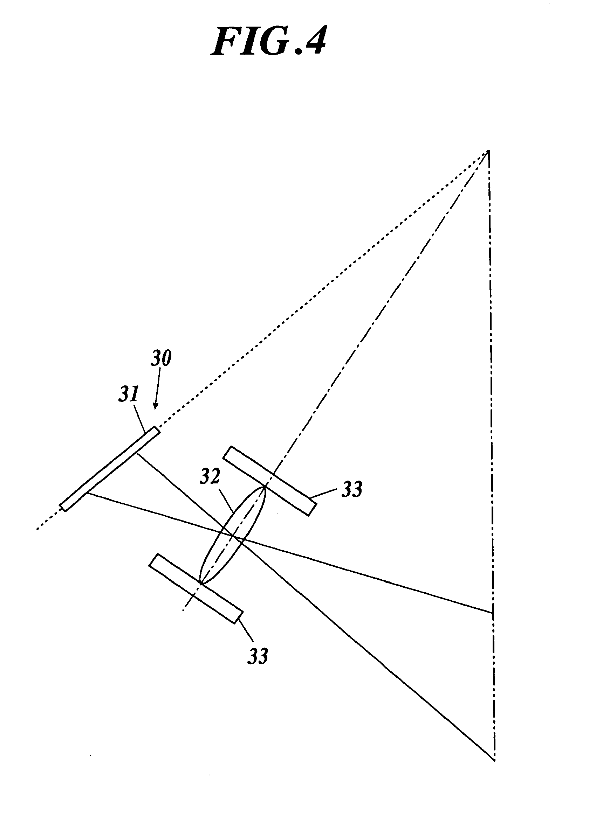

Specifically, as shown in FIG. 4, the imaging unit 30 is composed by including an imaging element 31; image-forming lens 32; a mount unit 33; and the like.

Note that FIG. 4 is a conceptual view showing an optical positional relationship between the imaging element 31 and the image-forming lens 32. A broken line in FIG. 4 indicates the imaging plane of the imaging element 31, and an alternate long and short dash line indicates a principal plane including a principal point of the image-forming lens 32. Moreover, a chain double-dashed line indicates an irradiation plane of the light irradiation unit 20, from which the laser beam is irradiated onto the work.

The imaging element 31 includes an image sensor (not shown) that images an image of the work (that is, the reflected light from the work) through the image-forming lens 32.

The image sensor is composed by including CMOS light receiving elements, for example, in a matrix of 1024 pixels x 1280 pixels, which are individually arrayed in two directions perpendicular to each other.

The image sensor has a so-called rolling shutter function to allow only the light receiving elements arranged in one or plural rows (or columns) to simultaneously receive the light, and to sequentially perform such light reception per row (or per column) in a column direction (or in a row direction).

The image-forming lens 32 forms the image of the reflected light, which comes from the work, on the imaging plane of the imaging element 31.

As the image-forming lens 32, for example, a standard lens, a wide-angle lens, a macro lens and the like can be used. In the optical probe P, a wider range is measured as such an image-forming lens 32 with lower magnification is being used, and a narrower range is measured as such an image-forming lens 32 with higher magnification is being used.

This image-forming lens 32 is supported on the mount unit 33 so as to be detachable therefrom.

The mount unit 33 is installed at a predetermined spot of the optical probe P, and supports the image-forming lens 32 so that the image-forming lens 32 can be detached from the optical probe P.

Specifically, a groove is formed on either one of the mount unit 33 and an edge portion of the image-forming lens 32, a protruding portion to be fitted to the groove concerned is formed on other thereof, the image-forming lens 32 can be mounted on the mount unit 33 by fitting the above-described protruding portion to the above-described groove, and the image-forming lens 32 can be detached from the mount unit 33 by separating the above-described protruding portion from the above-described groove.

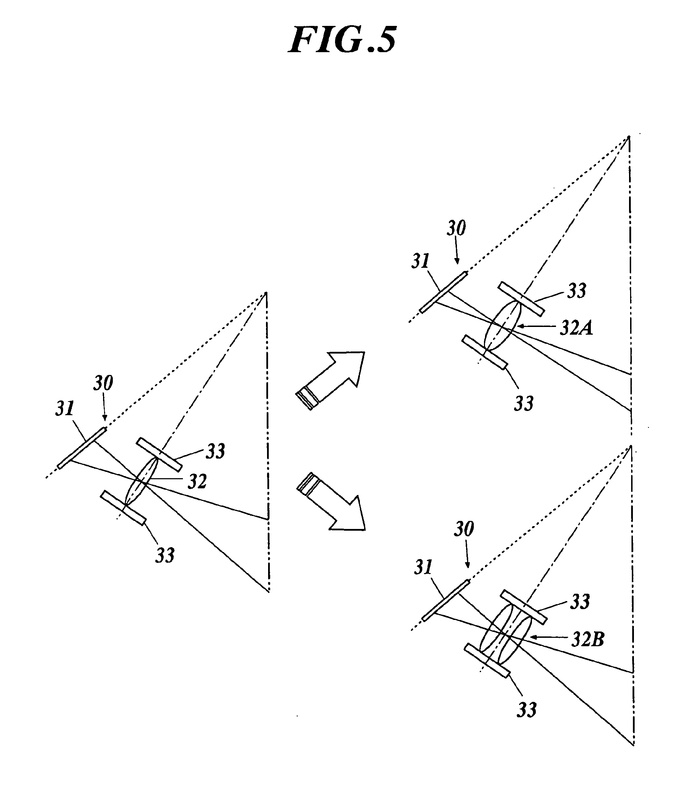

Therefore, as shown in FIG. 5, the image-forming lens 32 mounted on the imaging unit 30 is exchangeable with an image-forming lens 32A and image-forming lenses 32B, which have other optical magnifications, whereby it is made possible to adjust/change the measurement range and measurement accuracy of the optical probe P.

As described above, the mount unit 33 functions as a lens exchange means that makes the image-forming lens 32 exchangeable.

Note that the mount unit 33 just needs to be a unit that supports the image-forming lens 32 so that the image-forming lens 32 can be detached from the optical probe P, and a configuration thereof is not limited to that described above.

Moreover, such a configuration in which the image-forming lens 32 is detachable together with the mount unit 33 from the optical probe P may be adopted. That is to say, in the case where the mount unit 33 and the image-forming lens 32 are fixedly attached to each other, and the image-forming lens 32 is exchanged, then the image-forming lens 32 is detached together with the mount unit 33 from the optical probe P, and such a mount unit 33 including the image-forming lens 32A or the image-forming lenses 32B, which have the different optical magnifications, is attached to the optical probe P.

Next, a description is made of functions.

In this embodiment, the image-forming lens 32 is supported on the mount unit 33 so as to be detachable therefrom.

The image-forming lens 32 is detachable from the mount unit 33, and accordingly, in the case where the measurement range and measurement accuracy of the optical probe P are desired to be adjusted/changed, then the image-forming lens 32 is detached from the optical probe P, and the image-forming lenses 32A and 32B having the other optical magnifications can be attached to the optical probe P concerned.

That is to say, the image-forming lens 32 can be replaced in response to the desired measurement range and measurement accuracy.

As described above, in accordance with this embodiment, the mount unit 33 that supports the image-forming lens 32 so that the image-forming lens 32 can be detached from the optical probe P is provided as the lens exchange unit that makes the image-forming lens 32 exchangeable. Accordingly, in the case where the measurement range and the measurement accuracy are desired to be adjusted/changed, the image-forming lens 32 can be easily exchanged with such an image-forming lens 32 with desired optical magnification.

Therefore, it is unnecessary to prepare the plural types of optical probes P different in specifications of the measurement range and the measurement accuracy, and cost is reduced. Moreover, it is unnecessary to perform exchange work for the optical probe P, and the like, and accordingly, reduction of installation man-hours can be achieved. Furthermore, the high-speed scanning that has been heretofore achieved can be maintained.

Hence, usability of the shape measurement device can be enhanced.

### [Second Embodiment]

Next, a description is made of a second embodiment of the present invention while focusing on points thereof different from those of the first embodiment.

Note that the same reference numerals are assigned to similar constituents to those of the above-described first embodiment, and a description thereof is omitted.

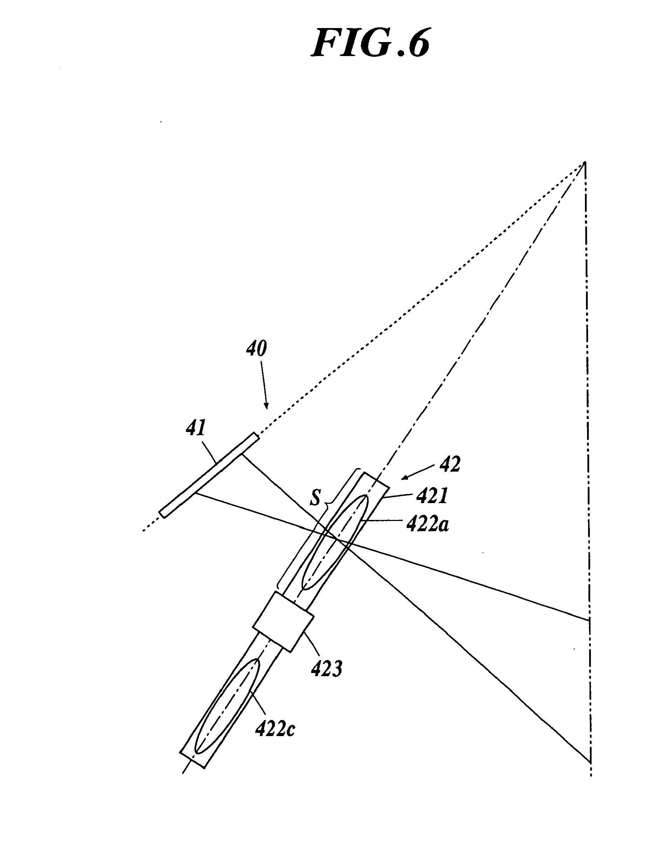

As shown in FIG. 6, an imaging unit 40 in this embodiment includes: an imaging element 41; a circular lens unit 42; and the like.

The imaging unit 41 has a similar configuration to that of the imaging element 31 of the above-described first embodiment.

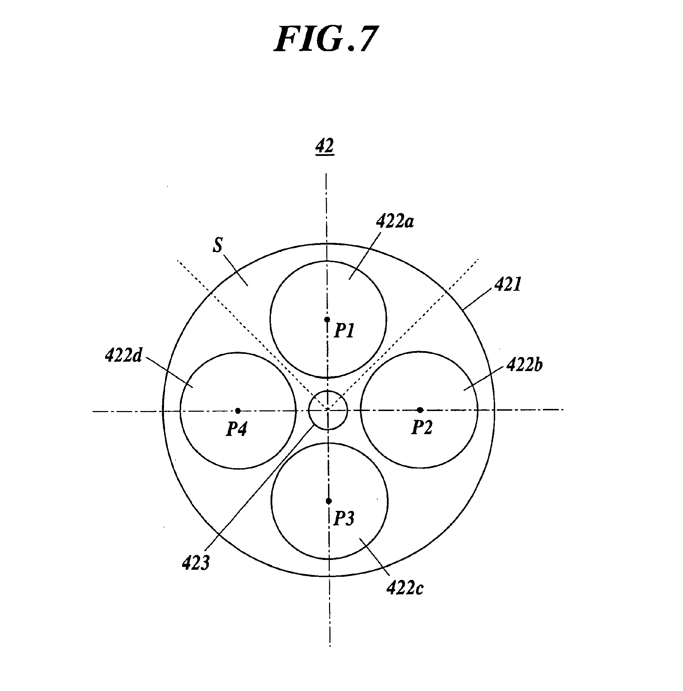

As shown in FIGS. 6 and 7, the circular lens unit 42 includes: a circular holding member 421; and four image-forming lenses 422a to 422d mounted on the holding member 421.

The holding member 421 includes a center portion 423 in a center thereof. On the periphery of the center portion 423, four openings (not shown) are formed around the center portion 423, and the four image-forming lenses 422a to 422d are fitted into such openings.

The image-forming lenses 422a to 422d are image-forming lenses different from one another in optical magnification.

The image-forming lenses 422a to 422d are arranged so that lens centers P1 to P4 thereof can be located at positions apart by an equal distance from the center portion 423 of the holding member 421.

The circular lens unit 42 as described above is arranged so that one region S thereof can face to the imaging element 41, and the measurement is performed by the image-forming lens, which is located in the region S, among the image-forming lenses 422a to 422d.

Then, the circular lens unit 42 is made rotatable about the center portion 423 taken as an axis, and is configured so that the image-forming lens located in the region S can be exchanged by rotating the circular lens unit 42.

Hence, a wider range is measured as such an image-forming lens with lower magnification is being located in the region S, and a narrower range is measured as such an image-forming lens with higher magnification is being located in the region S.

As described above, the imaging unit 40 of this embodiment includes the circular lens unit 42, and is thereby made capable of changing the optical magnification (measurement region) of the image-forming lens according to needs.

Note that the rotation of the circular lens unit 42 may be performed manually by the user, or in the case where the user designates the measurement accuracy by using the operation unit 103b of the host system 103, the rotation concerned may be performed in response to the designated measurement accuracy.

The circular lens unit 42 functions as a lens exchange means that makes the image-forming lenses 422a to 422d exchangeable.

As described above, in accordance with this embodiment, as a matter of course, similar effects to those of the first embodiment are obtained, and in addition, the circular lens unit 42 is provided, which is rotatable about the center portion 423 taken as an axis, and has the plural types of image-forming lenses 422a to 422d arranged therein, the image-forming lenses 422a to 422d having the centers P1 to P4 located at the positions apart by the equal distance from the center portion 423. Accordingly, a device configuration in which the plurality of image-forming lenses 422a to 422d are mounted integrally with one another can be adopted, and better usability of the shape measurement device is obtained.

Note that, in this embodiment, the description has been made while illustrating the circular lens unit 42 on which the four image-forming lenses 422a to 422d are mounted; however, there are no limitations on the number of image-forming lenses.

Moreover, it is not always necessary that all of the four image-forming lenses have the different magnifications, and for example, among the four image-forming lenses, two thereof may be image-forming lenses with the same magnification, and other two may be image-forming lenses with different magnifications.

Moreover, a function to automatically decide which of the image-forming lenses 422a to 422d is to be used (that is, the measurement accuracy and the measurement range) in response to the shape of the work may be mounted. In this case, for example, irregularities and the like of the work are recognized based on CAD data read in advance, and the measurement accuracy and the measurement range are decided.

### [Third Embodiment]

Next, a description is made of a third embodiment of the present invention while focusing on points thereof different from those of the first embodiment.

Note that the same reference numerals are assigned to similar constituents to those of the above-described first embodiment, and a description thereof is omitted.

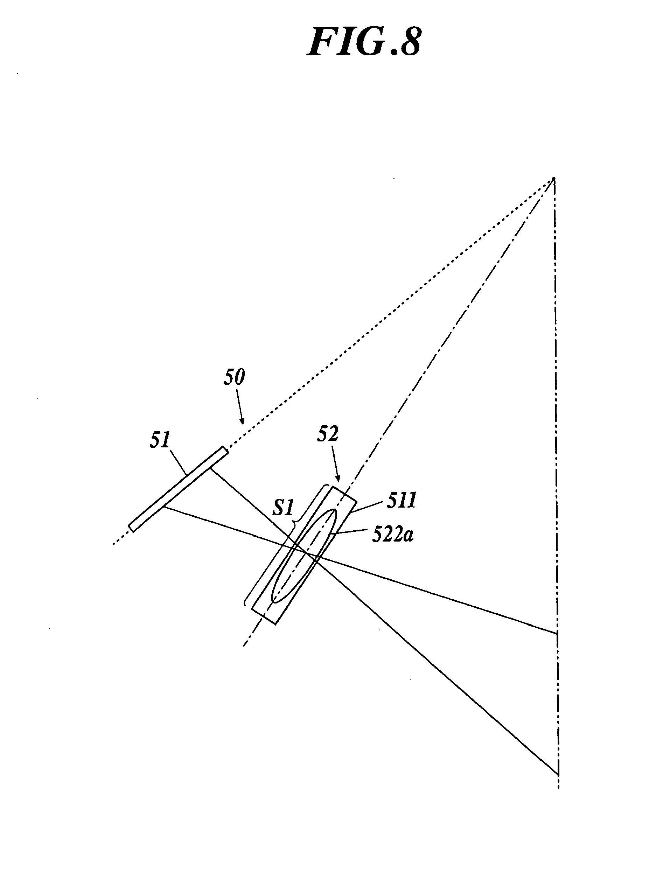

As shown in FIG. 8, an imaging unit 50 in this embodiment includes: an imaging element 51; a linear lens unit 52; and the like.

The imaging unit 51 has a similar configuration to that of the imaging element 31 of the above-described first embodiment.

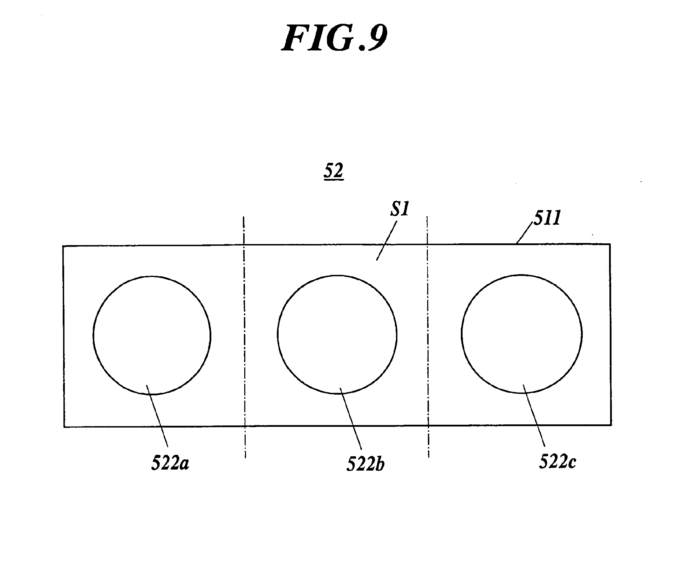

As shown in FIGS. 8 and 9, the linear lens unit 52 includes: a long holding member 511; and three image-forming lenses 522a to 522c mounted on the holding member 511.

In the holding member 511, three openings (not shown) are formed, and the three image-forming lenses 522a to 522c are fitted into such openings.

The image-forming lenses 522a to 522c are image-forming lenses different from one another in optical magnification, and are linearly arranged in the holding member 511.

The linear lens unit 52 is arranged so that one region S1 thereof can face to the imaging element 51, and the measurement is performed by the image-forming lens, which is located in the region S1, among the image-forming lenses 522a to 522c.

Then, the linear lens unit 52 is made slidable with respect to the imaging element 51, and is configured so that the image-forming lens located in the region S1 can be exchanged by sliding the linear lens unit 52.

Hence, a wider range is measured as such an image-forming lens with lower magnification is being located in the region S1, and a narrower range is measured as such an image-forming lens with higher magnification is being located in the region S1.

As described above, the imaging unit 50 of this embodiment includes the linear lens unit 52, and is thereby made capable of changing the optical magnification (measurement region) of the image-forming lens according to needs.

The linear lens unit 52 functions as a lens exchange means that makes the image-forming lenses 522a to 522c exchangeable.

As described above, in accordance with this embodiment, as a matter of course, similar effects to those of the first embodiment are obtained, and in addition, the linear lens unit 52 is provided, which is slidable with respect to the imaging element 51, and has the plural types of image-forming lenses 522a to 522c linearly arranged therein. Accordingly, a device configuration in which the plurality of image-forming lenses 522a to 522c are mounted integrally with one another can be adopted, and better usability of the shape measurement device is obtained.

Note that, in this embodiment, the description has been made while illustrating the linear lens unit 52 on which the three image-forming lenses 522a to 522c are mounted; however, there are no limitations on the number of image-forming lenses.

Moreover, it is not always necessary that all of the three image-forming lenses have the different magnifications, and for example, among the three image-forming lenses, two thereof may be image-forming lenses with the same magnification.

Moreover, a function to automatically decide which of the image-forming lenses 522a to 522c is to be used (that is, the measurement accuracy and the measurement range) in response to the shape of the work may be mounted. In this case, for example, irregularities and the like of the work are recognized based on CAD data read in advance, and the measurement accuracy and the measurement range are decided.

According to an aspect of the preferred embodiments of the present invention, there is provided a shape measurement device which scans a surface of a work by a probe in a noncontact manner and measures a surface shape of the work, the probe including: a light irradiation unit which irradiates linear light onto the work; and an imaging unit which images reflected light of the light irradiated from the light irradiation unit, the reflected light being reflected by the work, and the imaging unit includes:
an imaging element which images an image of the work;
an image-forming lens which forms the image of the reflected light being reflected by the work on an imaging plane of the imaging element; and
a lens exchange unit which makes the image-forming lens exchangeable.

Preferably, the lens exchange unit includes a mount unit which detachably supports the image-forming lens.

Preferably, the lens exchange unit includes a circular lens unit which is rotatable about a center portion of the circular lens unit taken as an axis, and has plural types of the image-forming lenses, the image-forming lenses being arranged so that lens centers of the image-forming lenses are located at positions apart by an equal distance from the center portion.

Preferably, the lens exchange unit includes a linear lens unit which is slidable with respect to the imaging element and has plural types of the image-forming lenses linearly arranged.

The embodiment disclosed this time should be considered in all respects to be illustrative but not to be restrictive. The scope of the present invention is not shown by the above description, but by claims, and is intended to include the equivalents to claims and all modifications within the scope of claims.

## Claims

1. A shape measurement device which scans a surface of a work by a probe in a noncontact manner and measures a surface shape of the work, the probe including: a light irradiation unit which irradiates linear light onto the work; and an imaging unit which images reflected light of the light irradiated from the light irradiation unit, the reflected light being reflected by the work, wherein the imaging unit comprises:
an imaging element which images an image of the work;
an image-forming lens which forms the image of the reflected light being reflected by the work on an imaging plane of the imaging element; and
a lens exchange unit which makes the image-forming lens exchangeable.

2. The shape measurement device according to claim 1, wherein the lens exchange unit includes a mount unit which detachably supports the image-forming lens.

3. The shape measurement device according to any one of the preceding claims,
wherein the lens exchange unit includes a circular lens unit which is rotatable about a center portion of the circular lens unit taken as an axis, and has plural types of the image-forming lenses, the image-forming lenses being arranged so that lens centers of the image-forming lenses are located at positions apart by an equal distance from the center portion.

4. The shape measurement device according to any one of the preceding claims,
wherein the lens exchange unit includes a linear lens unit which is slidable with respect to the imaging element and has plural types of the image-forming lenses linearly arranged.
